# EUROPEAN PATENT APPLICATION

(11) **EP 3 150 517 A1**
(43) Date of publication of application: **05.04.2017**
(21) Application number: 15187564.8
(22) Date of filing: 30.09.2015
(51) Int. Cl.: B65G 17/08, B65G 17/40, B65G 17/46

(54) **CONVEYOR BELT**

(71) Applicant: Logi Concept Engineering B.V., 7156 LM Beltrum (NL)
(72) Inventor: Brinkers, Joep Hendrik, 7151 CG Eibergen (NL)
(74) Representative: 't Jong, Bastiaan Jacob

(57) **Abstract**

The invention relates to a conveyor belt (1) comprising a plurality of adjacent conveyor belt elements (2) and a plurality of rods (3) connecting adjacent conveyor belt elements (2), wherein each belt element (2) comprises:
- an elongate body (10) having a support surface (9);
- first protrusions (11) arranged on a first side of the elongate body and having aligned openings;
- second protrusions (12) arranged on a second side opposite of the first side and having aligned openings, wherein the first protrusions (11) interlock with second protrusions (12) of an adjacent belt element (2) and a connecting rod (3) extends through the openings of the interlocked first and second protrusions (11, 12), and
- a plurality of friction elements (4), each friction element comprising a bridge portion (5) and two eyes (6) arranged on opposite sides of the bridge portion (5),
wherein the friction elements (4) are arranged between the belt elements (2) and wherein adjacent rods (3) extend through the eyes (6) of a friction element (4).

## Description

The invention relates to a conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions.

Such conveyor belts are widely known and typically made of a plastic, such as acetal plastics. The known conveyor belts are embodied with straight paths or curved paths, typically arc of a circle paths.

In the case of curved conveyor belts, the speed of the conveyor belt is limited by the friction force between the support surface of the conveyor belt and the product supported on the conveyor belt in combination with the centrifugal force the product will be subjected to as a result of the belt speed.

In a number of applications of a conveyor belt it is desired to have a flat, smooth support surface with a minimum of openings in the support surface. An example of such an application is wherein products are shrink wrapped in a foil. A product is provided with a plastic sleeve. The product is then transported through an oven, wherein the sleeve is subjected to heat in order to let the sleeve shrink around the product. If the support surface would have openings or ribs, the bottom of the shrink wrapped product will not be smooth, which could cause problems in the further handling of the products. Therefore, in such applications the support surface should be smooth and flat in the oven, but also in the part after the oven, where the shrink wrapped foil will cool down.

The conveyor belt according to the invention could be provided by a friction layer by 2K injection moulding. However, over time, the top layer of the 2K injection moulded material will get loose as a result of the forces and deformation of the top layer with respect to the base layer.

So, in applications where a flat, smooth conveyor belt with a curved path is desired, the friction between the conveyor belt and the products should be sufficient to withstand the centrifugal force on the products.

It is accordingly an object of the invention to improve the conveyor belt according to the preamble, in particular with respect to the friction of the support surface relative to the products supported by the support surface.

This object is achieved with a conveyor belt according to the preamble, which is characterized by a plurality of friction elements, each friction element comprising a bridge portion and two eyes arranged on opposite sides of the bridge portion, wherein the friction elements are arranged between the belt elements and wherein adjacent rods extend through the eyes of a friction element and wherein the top surface material of the bridge portion differs from the top surface material of the conveyor belt elements.

The friction elements arranged between the belt elements provide zones in the top surface of the conveyor belt with a different friction due to the use of a different material in the top surface of the bridge portions and in the top surface of the belt elements. As a result, the general support surface formed by the belt elements can be designed with a material for strength and robustness, whereas the friction elements can be designed to provide optimal friction allowing for a higher belt speed for a curved conveyor belt.

Because the friction elements have two eyes with a bridge portion in between and because the rods extend through these eyes, a closed shape connection is provided between the rods of the conveyor belt and the friction element. The connection does not rely on adhesion forces or the like, but is solely dependent on the mechanical strength of the material used for the friction elements.

In a preferred embodiment of the conveyor belt according to the invention, wherein at least two adjacent belt elements have each at least one recess in one of the first protrusions for accommodating an eye of a friction element and wherein the bridge portion of the friction element extends over the support surface of one of the two adjacent belt elements.

By providing a recess in the first protrusions, the friction element is confined by a conveyor belt element, such that the structural integrity of the conveyor belt is not dependent on the friction element. As a result, the friction element can be designed solely for the purpose of providing additional friction in the support surface of the conveyor belt and does not have to contribute to the strength of the belt.

Preferably, the at least one recesses of the two adjacent belt elements are arranged in line with each other, which line is perpendicular to the rods. This ensures that products positioned over the friction element are not moved or rotated on the conveyor belt, in particular at a transition from one conveyor belt to another, due to an asymmetric shape of the friction element, when seen in transport direction.

In a further preferred embodiment of the conveyor belt according to the invention the support surface comprises a groove extending between the recess in the first protrusion of said belt element towards the recess of the adjacent belt element, which groove is for at least partially accommodating the bridge portion of the friction element.

By providing a groove in the support surface of the belt element, the support surface of the conveyor belt remains flat, while the thickness of the bridge portion of the friction element can be increased.

In a very preferred embodiment of the conveyor belt according to the invention at least the top surface of the bridge portion comprises an elastomer material. An elastomeric material has typically a relative high friction ratio and can be easily compressed by the products on the conveyor belt. So, the friction elements could be designed such that they are somewhat elevated above the support surface of the conveyor belt elements. When a product is placed on the friction element it will be compressed providing a good contact between the friction element and the product, while ensuring a smooth support surface.

Another embodiment of the conveyor belt according to the invention further comprises bearing bushings arranged in the eyes of the friction element. The bearing bushings provide a reliable interface between the, typically, metal rods and the material of the friction element, reducing any wear of the eyes due to the movement of the rods in the eyes.

In yet another embodiment of the conveyor belt according to the invention the support surface is a substantially closed surface.

In still another embodiment of the conveyor belt according to the invention the elongate body of the conveyor belt elements widens linearly from one longitudinal end to the other longitudinal end.

Such an embodiment of the elongate body allows for a curved conveyor belt.

These and other features of the invention will be elucidated in conjunction with the accompanying drawings.
Figure 1 shows an embodiment of a conveyor belt according to the invention.
Figure 2 shows a cross-sectional view of the conveyor belt of figure 1.
Figure 3 shows a perspective view of a friction element of the conveyor belt according to figure 1.
Figure 4 shows a top view of a belt element of the conveyor belt according to figure 1.
Figure 5 shows the conveyor belt of figure 1 in a wider top view.
Figure 6 shows a second embodiment of a conveyor belt according to the invention.
Figure 7 shows a second embodiment of a friction element of the conveyor belt of figure 6.

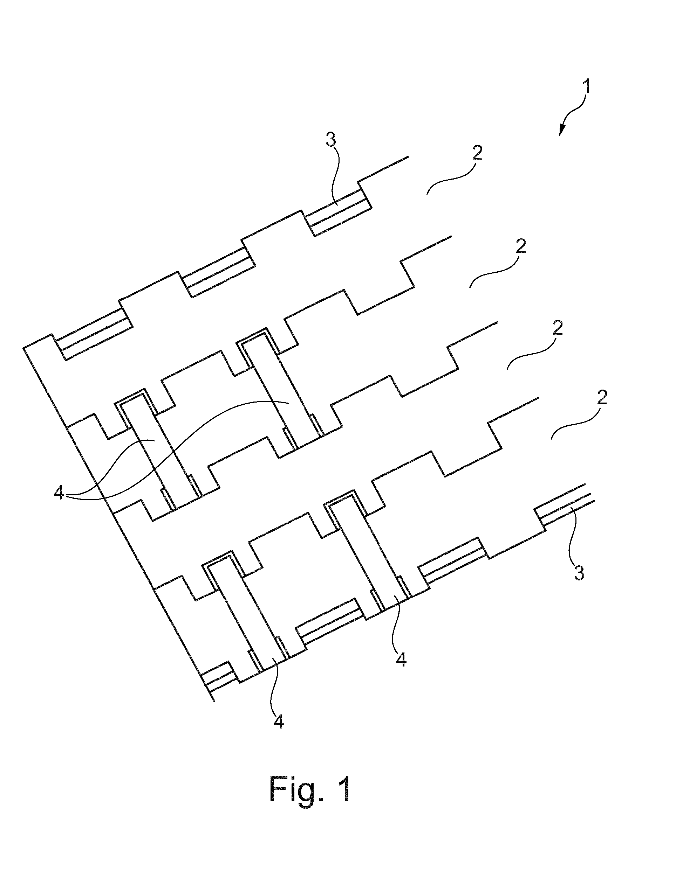

Figure 1 shows an embodiment of a conveyor belt 1 according to the invention. The conveyor belt 1 has a number of conveyor belt elements 2 and rods 3, which connect adjacent belt elements 2. Furthermore, friction elements 4 are arranged between the belt elements 2.

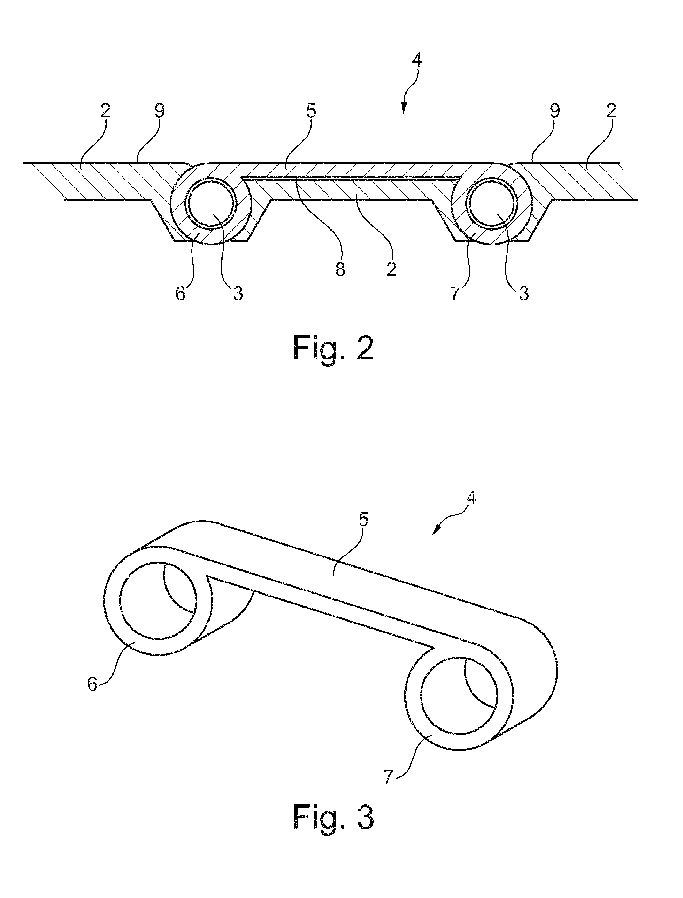

Figure 2 shows a cross-sectional view of the conveyor belt 1. The friction element 4 has a bridge portion 5, preferably of a elastomer, and two eyes 6, 7 arranged on opposite ends of the bridge portion 5 (see also figure 3). The bridge portion 5 extends through a groove 8 arranged in the support surface 9 of the belt elements 2. The rods 3 connecting adjacent belt elements 2 also extend through the eyes 6, 7 of the friction elements 4, such that the friction elements 4 are arranged in the conveyor belt 1 by a closed shape connection.

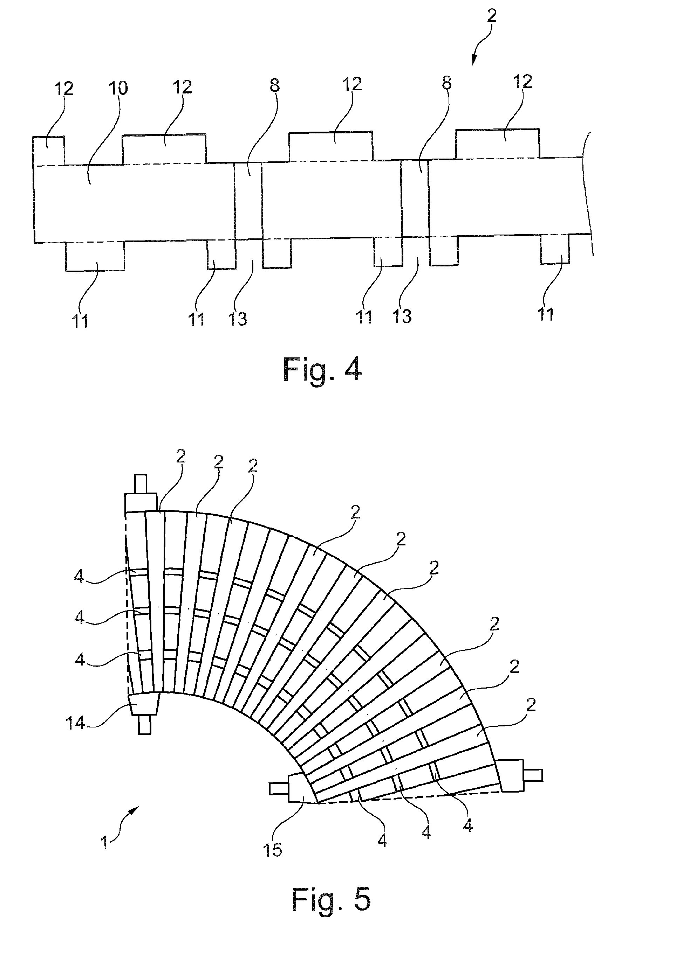

Figure 4 shows a top view of a belt element 2 in more detail. The belt element 2 has a elongate body 10 with first and second protrusions 11, 12 arranged on opposite longitudinal edges of the elongate body 10.

The first protrusions 11 are provided at selected positions with recesses 13 in which an eye 6 of a friction element 4 can be accommodated. The groove 8 extends from this recess 13 towards the other side of the elongate body 10 to accommodate the bridge portion 5.

Figure 5 shows the conveyor belt of figure 1 in a wider top view. The conveyor belt 1 has a curved path due to the linear widening of the elongate body 10 of each belt element 2. The belt 1 runs along the end rollers 14, 15. The friction elements 4 provide additional friction for products positioned on the conveyor belt 1 and ensure that the products can withstand a larger centrifugal force when being moved over the curved path of the conveyor belt 1.

Although the use of the friction elements according to the invention are most profitable in curved conveyor belts, they can also be used in the same way for straight conveyor belts.

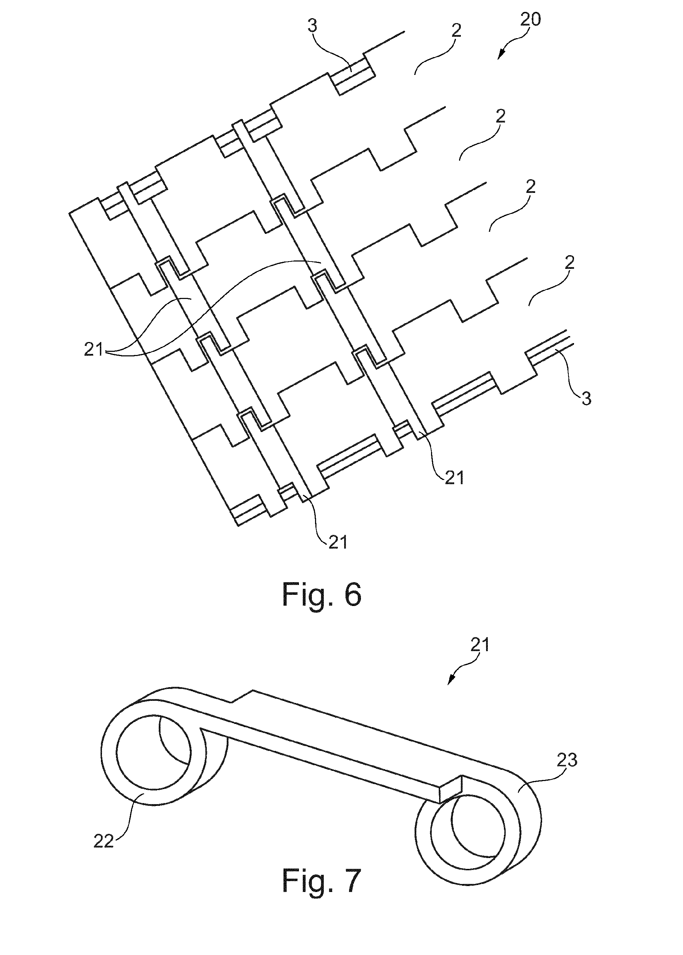

Figure 6 shows a second embodiment of a conveyor belt 20 according to the invention. This conveyor belt 20 is a variant of the conveyor belt according to figure 1. The conveyor belt 20 has on each belt element 2 a number of friction elements 21. This ensures that products being pulled on the conveyor belt 20 or being pushed of the conveyor belt 20 not to rotate.

Figure 7 shows a second embodiment of a friction element 21 of the conveyor belt of figure 6. The friction element 21 has a bridge portion 22, preferably of a elastomer, and being of full width, and having two eyes 23, 24 arranged on opposite ends of the bridge portion 22 and being of half width, such that subsequent belt elements 2 can be provided with the friction elements 21 and form a chain of friction elements 21.

## Claims

1. Conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings, wherein the first protrusions interlock with second protrusions of an adjacent belt element and a connecting rod extends through the openings of the interlocked first and second protrusions, **characterized by**
- a plurality of friction elements, each friction element comprising a bridge portion and two eyes arranged on opposite sides of the bridge portion,
wherein the friction elements are arranged between the belt elements and wherein adjacent rods extend through the eyes of a friction element and wherein the top surface material of the bridge portion differs from the top surface material of the conveyor belt elements.

2. Conveyor belt according to claim 1, wherein at least two adjacent belt elements have each at least one recess in one of the first protrusions for accommodating an eye of a friction element and wherein the bridge portion of the friction element extends over the support surface of one of the two adjacent belt elements.

3. Conveyor belt according to claim 2, wherein the at least one recesses of the two adjacent belt elements are arranged in line with each other, which line is perpendicular to the rods.

4. Conveyor belt according to claim 2 or 3, wherein the support surface comprises a groove extending between the recess in the first protrusion of said belt element towards the recess of the adjacent belt element, which groove is for at least partially accommodating the bridge portion of the friction element.

5. Conveyor belt according to any of the preceding claims, wherein at least the top surface of the bridge portion comprises an elastomer material.

6. Conveyor belt according to any of the preceding claims, further comprising bearing bushings arranged in the eyes of the friction element

7. Conveyor belt according to any of the preceding claims, wherein the support surface is a substantially closed surface.

8. Conveyor belt according to any of the preceding claims, wherein the elongate body of the conveyor belt elements widens linearly from one longitudinal end to the other longitudinal end.
